# EUROPÄISCHE PATENTSCHRIFT

(11) **EP 4 077 174 B1**
(45) Veröffentlichungstag und Bekanntmachung des Hinweises auf die Patenterteilung: **27.05.2026**
(21) Anmeldenummer: 21714629.9
(22) Anmeldetag: 04.03.2021
(51) Int. Cl.: B65G 17/34, B65G 43/02, B65G 43/06, B65G 17/06

(54) **FÖRDERWAGEN FÜR EINEN VERTEILFÖRDERER SOWIE ANBINDUNGSANORDNUNG ZUR BEFESTIGUNG EINES FÖRDERWAGENS AN EINEM ANTRIEBSMITTEL EINES VERTEILFÖRDERERS**
CONVEYING CARRIAGE FOR A DISTRIBUTING CONVEYOR AND CONNECTING ARRANGEMENT FOR FASTENING A CONVEYING CARRIAGE TO A DRIVE MEANS OF A DISTRIBUTING CONVEYOR
CHARIOT DE TRANSPORT POUR UN CONVOYEUR DISTRIBUTEUR ET ENSEMBLE DE RACCORDEMENT POUR FIXER UN CHARIOT DE TRANSPORT À UN MOYEN D'ENTRAÎNEMENT D'UN CONVOYEUR DISTRIBUTEUR

(30) Priorität: 06.03.2020 DE 102020202931
(43) Veröffentlichungstag der Anmeldung: 26.10.2022
(73) Patentinhaber: Gebhardt Fördertechnik GmbH, 74889 Sinsheim (DE); Körber Supply Chain GmbH, 78467 Konstanz (DE)
(72) Erfinder: GEBHARDT, Marco, 74889 Sinsheim (DE); DEMIR, Halit, 74889 Sinsheim (DE)
(74) Vertreter: Ullrich & Naumann PartG mbB
(86) Internationale Anmeldenummer: PCT/DE2021/200031
(87) Internationale Veröffentlichungsnummer: WO 2021/175389

(56) Entgegenhaltungen:
- EP-A2- 2 025 628
- DE-A1- 10 360 289
- DE-B3- 102015 004 787

## Beschreibung

Die Erfindung betrifft einen Verteilförderer, insbesondere Quergurtsorter, mit mindestens einem Förderwagen, mindestens einem Führungselement und einem Antriebsmittel, wobei der Förderwagen ausgelegt ist, entlang des mindestens einen Führungselements in einer Förderrichtung befördert zu werden, wobei der Förderwagen eine Anbindungsanordnung zur Anbindung des Förderwagens an das Antriebsmittel umfasst, wobei die Anbindungsanordnung ein Gelenklager aufweist.

Sortierförderer bzw. Verteilförderer sind Stückgut-Sortiersysteme zum "Identifizieren von in ungeordneter Reihenfolge ankommendem Stückgut aufgrund vorgegebener Unterscheidungsmerkmale und zum Verteilen auf Ziele, die nach den jeweiligen Erfordernissen festgelegt werden" (s. VDI-Richtlinie 3619). Eine Klassifikation findet dabei insbesondere nach der Leistungsfähigkeit statt. Höchste Durchsetze mit mehr als 10.000 Sortiergütern pro Stunde werden dabei bspw. von sogenannten Quergurtsortern erreicht.

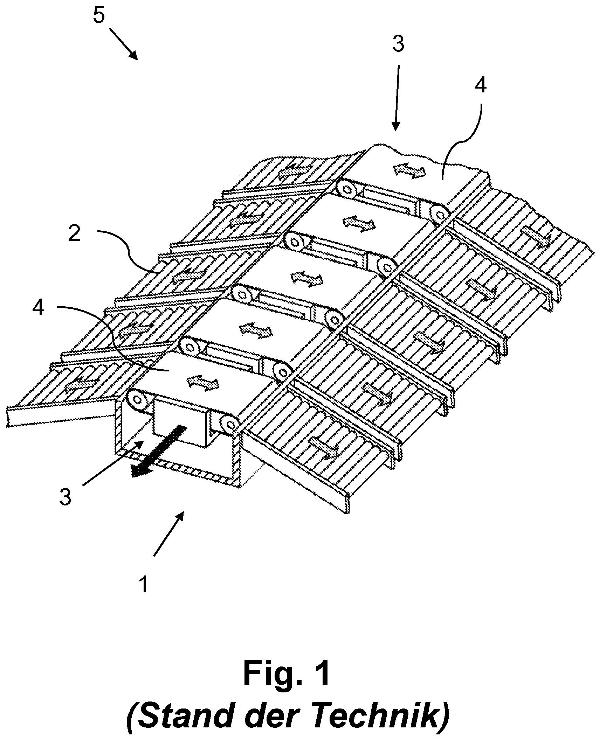

Der übliche Grundaufbau der genannten Sorter umfasst entsprechend der Darstellung in Fig. 1 eine Sortierstrecke 1, wobei längs dieser Sortierstrecke 1 aufeinanderfolgend Abwurfstationen 2 (Endstellen) und Einschleuse-Stationen (nicht gezeigt) angeordnet sind. Auf der Sortierstrecke 1 werden aufeinanderfolgend Förderwagen 3, oftmals auch als Carrier bezeichnet, geführt und angetrieben. Im Falle von Quergurtsortern weisen die Förderwagen 3 quer zu der Förderrichtung antreibbare Gurtförderer 4 zum Ein- und Ausschleusen des Sortierguts auf, wie beispielhaft in Fig. 1 gezeigt ist.

Ein Verteilförderer (nachfolgend auch als Sortierförderer bezeichnet) umfasst üblicherweise eine umlaufende geschlossene Förderstrecke, entlang der die Carrier transportiert werden. Die Carrier sind dabei im allgemeinen über Koppelstangen miteinander verbunden und bilden so eine Endloskette aus einer Vielzahl von Förderwagen. Für die notwendige Antriebskraft sorgt ein Motor, der die Energie auf ein Förder- bzw. Antriebsmittel des Sortierförderers überträgt. Das Förder- bzw. Antriebsmittel ist in der Regel als Endlosfördermittel in Gestalt einer Kette ausgebildet. Als Kette kommen hierbei insbesondere Gummiblockketten zum Einsatz. Jeder Carrier ist durch eine Anbindung mit dem Förder- bzw. Antriebsmittel des Sortierförderers verbunden. Über diese Anbindung wird die Antriebsenergie der Kette auf den Carrier übertragen, so dass der Carrier entlang der Förderstrecke bewegt wird.

An die Anbindungskomponente werden in der Praxis hohe Anforderungen gestellt. Zum einen wird die komplette Zugkraft auf diese Komponente übertragen. Zum anderen ergeben sich weitere Anforderungen durch die verschiedenen Fahrsituationen der Carrier. So müssen die Carrier Kurvenfahrten absolvieren und werden zudem über Steigungen auf unterschiedliche Höhenniveaus gebracht. Dementsprechend muss die Anbindung so realisiert sein, dass der Förderwagen relativ zu dem Antriebsmittel des Sortierförderers (d.h. üblicherweise einer Gummiblockkette) über eine hinreichende Bewegungsfreiheit verfügt.

Aus dem Stand der Technik sind bereits verschiedene gelenkig ausgeführte Anbindungskomponenten bekannt. So beschreibt beispielsweise die DE 10 2015 002 185 A1 eine Anbindungskomponente mit einem Befestigungselement mit zwei gelenkig miteinander verbundenen Gelenkteilen, wobei ein erstes Gelenkteil gelenkig mit dem als Förderkette ausgestalteten Antriebsmittel des Sortierförderers verbunden ist, während ein zweites Gelenkteil mit dem Förderwagen verbunden ist. Dementsprechend sind das erste Gelenkteil und das zweite Gelenkteil relativ zum Antriebsmittel beweglich und zumindest das erste Gelenkteil ist zudem relativ zum Förderwagen beweglich.

Das bekannte Befestigungselement ist allerdings dahingehend problematisch, dass es dem Förderwagen lediglich eine eingeschränkte Bewegungsfreiheit relativ zu dem Antriebsmittel bietet. Insbesondere in speziellen Fahrsituationen, wie bspw. engen Kurvenfahrten oder Fahrten in Bereichen, in denen das Antriebsmittel umgelenkt wird, erweist sich die Bewegungsfreiheit als nicht ausreichend, um Spannungen zu verhindern und mechanische Beanspruchungen des Förderwagens auf ein unkritisches Maß zu reduzieren. Hinzu kommt, dass das erste Gelenkteil beweglich bzw. drehbar an der Förderkette befestigt ist. Bewegungen des ersten Gelenkteils gegenüber der Förderkette führen dabei jedoch zu einem erhöhten Verschleiß der Förderkette.

Aus der DE 10 2015 004 787 A1 ist der Oberbegriff des Anspruchs 1 mit einer Verbindungsvorrichtung zum Verbinden eines Förderwagens mit einer Antriebskette einer Sortier-/Förderanlage sowie ein entsprechender Förderwagen bekannt. Die Verbindungsvorrichtung, durch welche im Hinblick auf eine erhöhte Laufruhe die Relativbewegungen zwischen Förderwagen und Antriebskette aufgenommen werden sollen, umfasst einen Schwenkhebel, welcher schwenkbar mit dem Förderwagen verbindbar ist, eine Kettenbefestigung, welche mit der Antriebskette verbindbar ist, und eine Gelenkverbindung, welche den Schwenkhebel und die Kettenbefestigung verbindet, wobei die Gelenkverbindung drei rotatorische Freiheitsgrade zwischen dem Schwenkhebel und der Kettenbefestigung aufweist.

Aus der DE 103 60 289 A1 ist ein Kupplungselement für eine lösbare Verbindung von zwei in Fahrtrichtung hintereinander angeordneten Schienenfahrzeugen bekannt, wobei das Kupplungselement einen Verbindungsbolzen umfasst, der in seinem mittleren Bereich in einem Radialgelenklager drehbar gelagert ist.

Aus der EP 2 025 628 A2 ist eine Sortiervorrichtung mit einer Anzahl von Förderwagen bekannt, wobei die Förderwagen über eine Anbindungsanordnung an die Antriebskette der Sortiervorrichtung angebunden sind.

Der vorliegenden Erfindung liegt die Aufgabe zugrunde, einen Verteilförderer der eingangs genannten Art derart auszugestalten und weiterzubilden, dass eine größere Bewegungsfreiheit des Förderwagens relativ zu dem Antriebsmittel des Verteilförderers realisiert ist.

Erfindungsgemäß wird die voranstehende Aufgabe durch die Merkmale des Anspruchs 1 gelöst. Danach ist der in Rede stehende Verteilförderer dadurch gekennzeichnet, dass das Gelenklager mit einem Gelenklager-Innenring auf einen zumindest indirekt fest mit dem Förderwagen verbundenen Gleitbolzen aufsitzt, wobei das Gelenklager auf dem Gleitbolzen seitliches Spiel besitzt und wobei die Anbindungsanordnung derart ausgestaltet ist, dass in einer neutralen Stellung des Gelenklagers auf dem Gleitbolzen die Mittelachse (M-FW) des Förderwagens, die Mittelachse (M-GL) des Gelenklagers sowie die neutrale Faser (NF-GBK) des Antriebsmittels miteinander fluchten.

In erfindungsgemäßer Weise ist erkannt worden, dass sich durch eine Integration eines Gelenklagers in die Anbindungsanordnung ein hohes Maß an Flexibilität erzielen lässt. Insbesondere kann aufgrund der spezifischen Eigenschaften des Gelenklagers in Abhängigkeit von der konkreten Einbausituation eine Beweglichkeit des Förderwagens gegenüber dem Antriebsmittel des Verteilförderers in mehreren Freiheitsgraden, sowohl lineare Freiheitsgrade als auch Rotationsfreiheitsgrade, erreicht werden. Dementsprechend kann die Anbindung ein optimiertes Fahrverhalten des Förderwagens für unterschiedliche Fahrsituationen gewährleisten.

Gemäß einer vorteilhaften Ausgestaltung ist das Gelenklager als Radial-Gelenklager ausgebildet. Dabei handelt es sich bekanntermaßen um ein Gleitlager, bei dem ein Gleitkontakt zwischen einem kugelig geformten Innenring und einem Außenring mit hohlkugeliger Innenform besteht. Aufgrund der sphärischen Ausformung der Gleitflächen ermöglicht ein Radial-Gelenklager Dreh-, Kipp- oder Schwenkbewegungen, die bei einem Einbau des Radial-Gelenklagers in die Anbindungsanordnung auf den Förderwagen übertragen werden können. Als besonders vorteilhaft erweist sich dabei die hohe Tragfähigkeit eines Radial-Gelenklagers sowie die Eignung, langsame Schwenkbewegungen präzise aufzunehmen und somit Ausgleichsbewegungen zwischen Förderwagen und Antriebsmittel zu kompensieren.

Das Radial-Gelenklager kann dabei als wartungspflichtiger Lager ausgeführt sein, dessen Einzelteile durch einen Öl- bzw. Schmierfilm voneinander getrennt werden müssen. In dieser Ausgestaltung kommen vorzugsweise Stahl/Stahl Gleitpaare zum Einsatz, wobei als Stahl Wälzlagerstahl bevorzugt ist. Alternativ kann das Gelenklager auch als wartungsfreies Radial-Gelenklager ausgeführt sein. Hierbei können bspw. Hartchrom/PTFE (Polytetrafluorethylen)- oder Chromstahl/PTFE-Gleitpaarungen zum Einsatz kommen. Aufgrund der speziellen Materialzusammensetzung erfordern diese Gelenklager keine Nachschmierung, was sich insbesondere vor dem Hintergrund der relativ schwer zugänglichen Einbausituation der Anbindungsanordnung unterhalb des Förderwagens als vorteilhaft erweist.

Gemäß einer vorteilhaften Ausgestaltung kann das Gelenklager in ein Gelenkgehäuse eingebaut sein, welches seinerseits über ein Verbindungselement fest mit dem Antriebsmittel verbunden ist. Auf diese Weise wird eine starre Verbindung an dem Antriebsmittel erreicht, d.h. es finden keine Dreh- oder Schwenkbewegungen eines Bauteils der Anbindungsanordnung unmittelbar an dem Antriebsmittel statt. Dementsprechend ist ein Verschleiß der Förderkette minimiert. In vorteilhafter Weise ist das Verbindungselement dabei bspw. als gekantete Lasche ausgeführt.

Als Antriebsmittel des Verteilförderers bietet sich der Einsatz einer Gummiblockkette an. Diese Art von Antriebsketten besitzt neben der Geräuscharmut den Vorteil eines gelenklosen und exakt zu bestimmenden Laufs. Im Hinblick auf eine effiziente Übertragung der Antriebsenergie auf den Förderwagen kann vorgesehen sein, dass die Gummiblockkette derart ausgeführt ist, dass sie vorzugsweise in definierten Abständen entlang der Kette ausgebildete Durchgangslöcher aufweist, die zur Kopplung mit der Anbindungsanordnung mittels geeigneter Bolzenverbindungen verwendet werden können.

Vorzugsweise können diese Durchgangslöcher vertikal ausgerichtet sein, wenn sich die Gummiblockkette in einem Einbauzustand befindet. In dieser Ausgestaltung kann ein als gekantete Lasche ausgebildetes und mit dem Gehäuse des Gelenklagers gekoppeltes Verbindungselement mit einem abgekanteten Abschnitt quasi von oben auf der Gummiblockkette aufsitzend mit der Kette verschraubt werden, wodurch eine Verbindung mit hoher Zugfestigkeit realisiert ist.

Erfindungsgemäß ist im Hinblick auf eine optimierte Beweglichkeit des Förderwagens in Bezug auf das Antriebsmittel des Verteilförderers vorgesehen, dass das Gelenklager mit einem Gelenklager-Innenring auf einen zumindest indirekt fest mit dem Förderwagen verbundenen Gleitbolzen sitzt, wobei das Gelenklager auf dem Gleitbolzen seitliches Spiel besitzt. Gemäß einer vorteilhaften Ausgestaltung sind das Gelenklager sowie der Gleitbolzen dabei derart konstruiert, dass der Gleitbolzen in einer Einbausituation im Wesentlichen horizontal sowie orthogonal zur Förderrichtung ausgerichtet ist. Auf diese Weise wird ein linearer Freiheitsgrad orthogonal zur Förderrichtung erreicht, wodurch sich Verschiebungen des Förderwagens senkrecht zur Förderrichtung ausgleichen lassen.

Im Konkreten kann der Gleitbolzen zwischen zwei seitlichen Befestigungselementen angeordnet sein, die starr mit dem Förderwagen verbunden sind. In vorteilhafter Weise sind die seitlichen Befestigungselementen beanstandet zueinander beidseits einer Mittelachse des Verteilförderers angeordnet, wobei der Abstand zwischen den Befestigungselementen ein seitliches Spiel für das Gelenklager auf dem Gleitbolzen definiert.

Erfindungsgemäß ist die Anbindungsanordnung derart ausgestaltet, dass in einer neutralen Stellung des Gelenklagers auf dem Gleitbolzen die Mittelachse des Förderwagens, die Mittelachse des Gelenklagers sowie die neutrale Faser des Antriebsmittels des Verteilförderers (insbesondere einer Gummiblockkette) miteinander fluchten. Auf diese Weise ist ein besonders stabiler und ruhiger Lauf des Förderwagens mit einer maximalen Beweglichkeit zu beiden Seiten der Mittelachse des Verteilförderers gewährleistet.

Es gibt nun verschiedene Möglichkeiten, die Lehre der vorliegenden Erfindung in vorteilhafter Weise auszugestalten und weiterzubilden. Dazu ist einerseits auf die abhängigen Patentansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Darstellung den allgemeinen Aufbau eines Quergurtsorters gemäß dem Stand der Technik,
- Fig. 2: in einer perspektivischen Darstellung eine Einbausituation eines Förderwagens in einer Sortieranlage mit Anbindung an ein Antriebsmittel gemäß einem Ausführungsbeispiel der Erfindung,
- Fig. 3: in einer perspektivischen Darstellung eine an einem Antriebsmittel befestigte Anbindungsanordnung eines Förderwagens gemäß einem Ausführungsbeispiel der Erfindung,
- Fig. 4: in einer schematischen Ansicht die einzelnen Achsen einer Anbindungsanordnung gemäß einem Ausführungsbeispiel der Erfindung, und
- Fig. 5: in einer schematischen Ansicht eine Anbindungsanordnung mit fluchtender Mittelachse gemäß einem Ausführungsbeispiel der Erfindung.

In den Figuren bezeichnen gleiche Bezugszeichen, soweit nicht anders angegeben, gleiche Komponenten bzw. Bauteile.

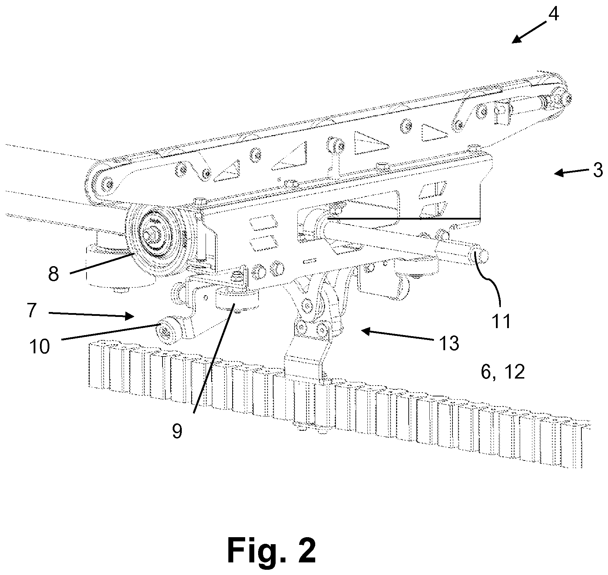

Fig. 2 zeigt in einer perspektivischen Darstellung eine Einbausituation eines Förderwagens 3 in einem Verteilförderer 5 (nachfolgend auch als Sortierförderer oder Sortieranlage bezeichnet) mit einer Anbindung an ein Antriebsmittel 6 des Verteilförderers 5 gemäß einem Ausführungsbeispiel der Erfindung. Die gesamte Sortieranlage 5 umfasst dabei eine Vielzahl von Förderwagen 3, die miteinander gekoppelt sind und üblicherweise eine Endloskette bilden.

Wie in Fig. 2 zu erkennen ist, umfasst jeder Förderwagen 3 (nachfolgend auch als Carrier bezeichnet) pro Seite einen Rollenverbund 7, der wiederum aus insgesamt drei Rollen aufgebaut ist. Die Führung der Carrier 3 bilden Rohre (in Fig. 2 aus Gründen der Übersichtlichkeit nicht gezeigt), auf denen eine oben aufliegende Laufrolle 8 des Rollenverbundes 7 abrollt und eine seitliche Führungsrolle 9 und eine untere Stützrolle 10 den Carrier 3 in Position halten. Eine Koppelstange 11, welche sich in Förderrichtung gesehen am hinteren Ende eines jeden Carrier 3 befindet, bildet das Verbindungselement zwischen den Carriern 3. Dadurch wird der gesamte Sorter zu einer Endloskette aus mehreren Förderwagen 3. Während das eine Ende der Koppelstange 11 fest mit dem jeweiligen Förderwagen 3 verbunden ist, wird das andere Endstück gelenkig gelagert. Durch diese Anordnung wird eine Fahrt in Steigungen und Kurven ermöglicht.

Für die notwendige Antriebskraft sorgt ein Motor, der die Energie auf das Antriebsmittel 6 in Gestalt einer Gummiblockkette 12 überträgt. Die Carrier 3 sind mit dieser Gummiblockkette 12 durch eine gelenkige Anbindungsanordnung 13 verbunden und werden dementsprechend durch die Gummiblockkette 12 in Bewegung gesetzt. Mit anderen Worten wird über die Anbindungsanordnung 13 die Antriebsenergie der Gummiblockkette 12 auf den jeweiligen Carrier 3 übertragen. Dabei wird die komplette Zugkraft der Gummiblockkette 12 auf die Anbindungsanordnung 13 übertragen.

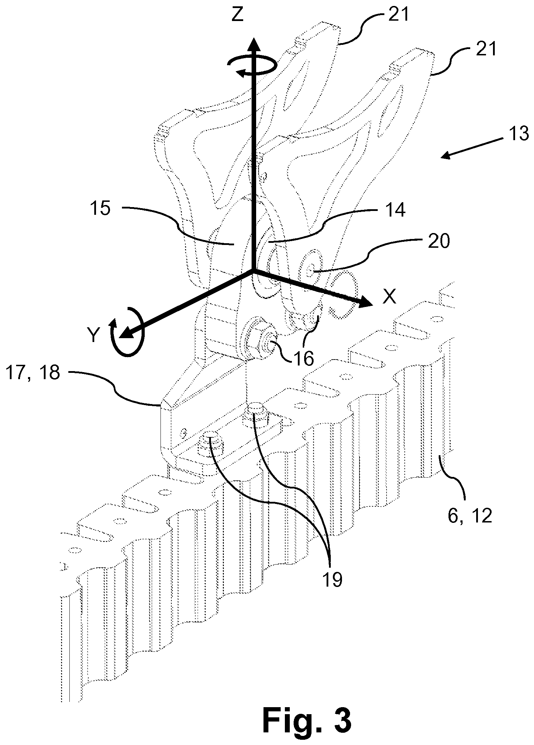

Fig. 3 zeigt die Anbindungsanordnung 13 des Förderwagens 3 gemäß Fig. 2 in einer vergrößerten Darstellung. Erfindungsgemäß umfasst die Anbindungsanordnung 13 ein Gelenklager 14, wobei dieses entsprechend der Darstellung in Fig. 3 als Radial-Gelenklager ausgebildet sein kann. Durch die Integration eines Gelenklagers 14 in die Anbindungsanordnung 13 kann eine Beweglichkeit des Förderwagens 3 relativ zu der Antriebskette 12 in mehreren Freiheitsgraden realisiert werden, wie nachfolgend im Detail beschrieben wird. Insbesondere wird die Anbindung gemäß Ausführungen der Erfindung speziellen Anforderungen gerecht, die aus unterschiedlichen Fahrsituationen eines Sorters resultieren. In diesem Zusammenhang ist wesentlich, dass die Carrier 3 neben Kurvenfahrten auch Bewegungen auf unterschiedliche Höhenniveaus bewältigen müssen. Durch die erfindungsgemäße Vorkehrung eines Gelenklagers 14 kann die Anbindungsanordnung 13 in einer Weise ausgestaltet werden, dass sie sämtliche dazu notwendigen Freiheitsgrade aufweist, ohne dabei wesentliche Spannungen am Förderwagen 3 aufzubauen.

Gemäß dem in Fig. 3 dargestellten Ausführungsbeispiel ist das Gelenklager 14 in ein Gehäuse 15 eingebaut, welches an einem unteren Abschnitt über zwei Schraubverbindungen 16 starr mit einem Verbindungselement 17 verbunden ist. Das Verbindungselement 17 wiederum, welches als eine in einem unteren Bereich abgekantete Lasche 18 ausgebildet ist, ist über zwei Bolzenverbindungen 19 mit der Gummiblockkette 12 fest verbunden.

Wie in Fig. 3 weiterhin zu erkennen ist, umfasst die Anbindungsanordnung 13 einen Gleitbolzen 20, der mit einer im Wesentlichen horizontalen und quer zur Förderrichtung verlaufenden Ausrichtung durch den Innenring des Gelenklagers 14 hindurchgeführt ist. Die beiden Enden des Gleitbolzens 20 sind jeweils starr mit seitlichen Befestigungselementen 21 gekoppelt. Die Befestigungselemente 21 erstrecken sich über das Gelenklager 14 hinaus nach oben und sind in an sich bekannter Weise, bspw. mittels Schraubverbindungen, mit einer geeigneten Aufnahme an der Unterseite des Förderwagens 3 fest verbunden (nicht gezeigt).

Für die nachfolgende Beschreibung der Funktionsweise der Anbindungsanordnung 13 und speziell des Gelenklagers 14 wird das in Fig. 3 dargestellte Koordinatensystem zugrunde gelegt. Danach wird eine horizontale Ebene durch die x-und die y-Achse aufgespannt, wobei die x-Achse orthogonal und die y-Achse parallel zur Förderrichtung verlaufen. Die z-Achse beschreibt eine Vertikale.

Das in das Gehäuse 15 eingebaute Gelenklager 14 ermöglicht dem Förderwagen 3 zunächst einmal Drehungen um die z-Achse. Diese Drehungen um die z-Achse werden für Kurvenfahrten des Förderwagens 3 benötigt.

In der Praxis muss die Gummiblockkette 12 durch Umlenkrollen, die an einem Gestell des Sortierförderers 5 befestigt sind, umgelenkt werden. Hierdurch erfährt die Gummiblockkette 12 einen Polygoneffekt, wohingegen die Förderwagen 3 innerhalb einer Kurve einen annähernd optimalen Radius fahren. Der dabei entstehende Versatz zwischen Förderwagen 3 und Gummiblockkette 12 kann ebenfalls von der Anbindungsordnung 13 gemäß Ausführungen der Erfindung ausgeglichen werden. Konkret erfolgt dies über eine lineare Verschiebung des Gelenklagers 14 in Richtung der x-Achse. Realisiert wird diese Bewegung über die Kinematik der Anbindung 13. Wie bereits oben beschrieben, befindet sich innerhalb des Innenrings des Gelenklagers 14 ein Gleitbolzen 20, der wiederum mit dem Förderwagen 3 fest verbunden ist, bspw. über die oben angeführten seitlichen Befestigungselemente 21. Die Länge des Gleitbolzens 20 ist um ein gewisses Maß größer als die Breite des Gelenklagers 14 (in x-Richtung gesehen), somit wird die Verschiebung ermöglicht.

Neben dem Ausgleich des Polygoneffekts der Gummiblockkette 12 wird der lineare Freiheitsgrad in x-Richtung zudem immer dann benötigt, wenn der Carrier 3 eine Verschiebung senkrecht zur Förderrichtung erfährt. Beispielszenarien hierzu sind der Ein- und Ausschleusungsprozess oder im Bereich des Antriebs.

Die Fahrt auf ein anderes Höhenniveau, sei es über eine geradlinige Steigung oder über eine Wendelsteigung, erfordert die Rotationsfreiheitsgrade um die x-, y- und z-Achse. Gemäß Ausführungsformen der Erfindung können alle drei Drehungen ebenfalls über das Gelenklager 13 realisiert werden, wie durch die rotierenden Pfeile in Fig. 3 angedeutet.

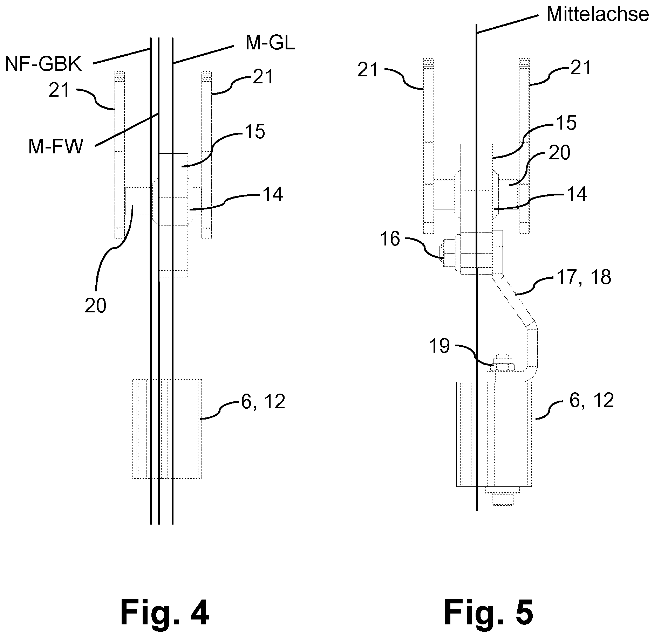

Fig. 4 zeigt in einer schematischen Ansicht die relevanten Achsen einer Anbindungsanordnung 13 gemäß einem Ausführungsbeispiel der Erfindung. Dabei handelt es sich zum einen um die Mittelachse M-FW des Förderwagens 3 (in Förderrichtung gesehen). Weiterhin relevant ist die Mittelachse M-GL des Gelenklagers 14 sowie die neutrale Faser NF-GBK der Gummiblockkette 12. Gemäß einer bevorzugten Ausführungsform der Erfindung, dargestellt in Fig. 5, ist die Anbindungsanordnung 13 derart ausgestaltet, dass die genannten Achsen in einer neutralen Grundstellung des Gelenklagers 14 allesamt miteinander fluchten. Die neutrale Grundstellung des Gelenklagers 14 kann dabei durch eine mittige Positionierung des Gelenklagers 14 auf dem Gleitbolzen 20 definiert sein.

Erreicht wird die fluchtende Anordnung durch eine spezielle Ausgestaltung des Verbindungselements 17, welches das Gelenkgehäuse 15 mit der Gummiblockkette 12 verbindet. Wie in Fig. 5 zu erkennen, ist dieses Verbindungselement 17 als eine abgekantete Lasche 18 ausgeführt, wobei ein abgekanteter unterer Abschnitt der Lasche 18 auf der Gummiblockkette 12 aufsitzt und über zwei oder mehrere Bolzen 19 mit der Gummiblockkette 12 verbunden ist. Die Bolzen 19 sind dabei von oben durch in der Gummiblockkette 12 in regelmäßigen Abständen ausgebildete Durchgangslöcher hindurchgeführt und von unten verschraubt. Durch die Kantung an der Lasche 18 fluchtet sowohl die Gelenkmittelachse, die neutrale Faser der Gummiblockkette 12 als auch die Mittelachse des Förderwagens 3 zueinander. Die fluchtende Ausgestaltung gewährleistet eine maximale Beweglichkeit des Förderwagens 3 nach beiden Seiten der Mittelachse des Verteilförderers 5.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung lediglich zur Er-örterung der beanspruchten Lehre dienen, diese jedoch nicht auf die Ausführungsbeispiele einschränken.

### Bezugszeichenliste

- 1: Sortierstrecke
- 2: Abwurfstation (Endstelle)
- 3: Förderwagen
- 4: Gurtförderer
- 5: Verteilförderer
- 6: Antriebsmittel
- 7: Rollenverbund
- 8: Laufrolle
- 9: seitliche Führungsrolle
- 10: untere Stützrolle
- 11: Koppelstange
- 12: Gummiblockkette
- 13: Anbindungsanordnung
- 14: Gelenklager
- 15: Gehäuse
- 16: Schraubverbindung
- 17: Verbindungselement
- 18: Lasche
- 19: Bolzenverbindung
- 20: Gleitbolzen
- 21: Befestigungselement
- M-FW: Mittelachse Förderwagen
- M-GL: Mittelachse Gelenklager
- NF-GBK: neutrale Faser Gummiblockkette

## Patentansprüche

1. Verteilförderer (5), insbesondere Quergurtsorter, mit mindestens einem Förderwagen (3), mindestens einem Führungselement und einem Antriebsmittel (6), wobei der Förderwagen (3) ausgelegt ist, entlang des mindestens einen Führungselements in einer Förderrichtung befördert zu werden, wobei der Förderwagen (3) eine Anbindungsanordnung (13) zur Anbindung des Förderwagens (3) an das Antriebsmittel (6) umfasst, wobei die Anbindungsanordnung (13) ein Gelenklager (14) aufweist,
**dadurch gekennzeichnet, dass** das Gelenklager (14) mit einem Gelenklager-Innenring auf einen zumindest indirekt fest mit dem Förderwagen (3) verbundenen Gleitbolzen (20) aufsitzt, wobei das Gelenklager (14) auf dem Gleitbolzen (20) seitliches Spiel besitzt und wobei die Anbindungsanordnung (13) derart ausgestaltet ist, dass in einer neutralen Stellung des Gelenklagers (14) auf dem Gleitbolzen (20) die Mittelachse (M-FW) des Förderwagens (3), die Mittelachse (M-GL) des Gelenklagers (14) sowie die neutrale Faser (NF-GBK) des Antriebsmittels (6) miteinander fluchten.

2. Verteilförderer nach Anspruch 1, wobei das Gelenklager (14) als vorzugsweise wartungsfreies Radial-Gelenklager ausgeführt ist.

3. Verteilförderer nach Anspruch 1 oder 2, wobei das Gelenklager (14) in ein Gelenkgehäuse (15) eingebaut ist, das über ein Verbindungselement (17) fest mit dem Antriebsmittel (6) verbunden ist.

4. Verteilförderer nach Anspruch 3, wobei das Verbindungselement (17) als gekantete Lasche (18) ausgeführt ist.

5. Verteilförderer nach Anspruch 3 oder 4, wobei das Antriebsmittel (6) eine Gummiblockkette (12) mit in einem Einbauzustand der Gummiblockkette (12) in vertikaler Ausrichtung verlaufenden Durchgangslöchern umfasst, und wobei das Verbindungselement (17) mittels mindestens eines durch eines der Durchgangslöcher der Gummiblockkette (12) geführten Bolzens (19) mit der Gummiblockkette (12) verbunden ist.

6. Verteilförderer nach einem der Ansprüche 1 bis 5, wobei der Gleitbolzen (20) zwischen zwei seitlichen Befestigungselementen (21) angeordnet ist, die fest mit dem Förderwagen (3) verbunden sind.

## Claims

1. Distributing conveyor (5), in particular a crossbelt sorter, comprising at least one conveying carriage (3), at least one guide element and a drive means (6), wherein the conveying carriage (3) is configured to be conveyed along the at least one guide element in a conveying direction, wherein the conveying carriage (3) comprises a connecting arrangement (13) for connecting the conveying carriage (3) to the drive means (6), wherein the connecting arrangement (13) has an articulated bearing (14),
**characterized in that** the articulated bearing (14) is seated with an articulated bearing inner ring on a slide bolt (20) that is at least indirectly fixedly connected to the conveying carriage (3), wherein the articulated bearing (14) has lateral play on the slide bolt (20) and wherein the connecting arrangement (13) is configured in such a way that, in a neutral position of the articulated bearing (14) on the slide bolt (20), the central axis (M-FW) of the conveying carriage (3), the central axis (M-GL) of the articulated bearing (14), and the neutral axis (NF-GBK) of the drive means (6) are aligned with one another.

2. Distributing conveyor according to claim 1, wherein the articulated bearing (14) is designed as a radial articulated bearing which is preferably maintenance-free.

3. Distributing conveyor according to claim 1 or 2, wherein the articulated bearing (14) is installed in an articulated housing (15) that is fixedly connected to the drive means (6) via a connecting element (17).

4. Distributing conveyor according to claim 3, wherein the connecting element (17) is designed as a canted mounting link (18).

5. Distributing conveyor according to claim 3 or 4, wherein the drive means (6) comprises a rubber block chain (12) with through holes extending in a vertical orientation in an installed state of the rubber block chain (12), and wherein the connecting element (17) is connected to the rubber block chain (12) by means of at least one bolt (19) guided through one of the through holes of the rubber block chain (12).

6. Distributing conveyor according to anyone of claims 1 to 5, wherein the slide bolt (20) is arranged between two lateral fastening elements (21) that are fixedly connected to the conveying carriage (3).

## Revendications

1. Convoyeur de distribution (5), en particulier trieur à bande transversale, comprenant au moins un chariot de transport (3), au moins un élément de guidage et un moyen d'entraînement (6), le chariot de transport (3) étant conçu pour être déplacé le long dudit au moins un élément de guidage dans une direction de transport, le chariot de transport (3) comprenant un dispositif de liaison (13) destiné à relier le chariot de transport (3) au moyen d'entraînement (6), le dispositif de liaison (13) comportant un palier à rotule (14),
**caractérisé en ce que** le palier à rotule (14) est monté, par l'intermédiaire d'une bague intérieure de palier à rotule, sur un boulon coulissant (20) relié au moins indirectement de manière fixe au chariot de transport (3), le palier à rotule (14) présentant un jeu latéral sur le boulon coulissant (20) et **en ce que** le dispositif de liaison (13) est conçu de telle sorte que, dans une position neutre du palier à rotule (14) sur le boulon coulissant (20), l'axe médian (M-FW) du chariot de transport (3), l'axe médian (M-GL) du palier à rotule (14) ainsi que la fibre neutre (NF-GBK) du moyen d'entraînement (6) soient alignés.

2. Convoyeur de distribution selon la revendication 1, dans lequel le palier à rotule (14) est réalisé sous la forme d'un palier à rotule radial, de préférence sans entretien.

3. Convoyeur de distribution selon la revendication 1 ou 2, dans lequel le palier à rotule (14) est monté dans un boîtier d'articulation (15) qui est relié de manière fixe au moyen d'entraînement (6) par l'intermédiaire d'un élément de liaison (17).

4. Convoyeur de distribution selon la revendication 3, dans lequel l'élément de liaison (17) est réalisé sous la forme d'une patte coudée (18).

5. Convoyeur de distribution selon la revendication 3 ou 4, dans lequel le moyen d'entraînement (6) comprend une chaîne à blocs en caoutchouc (12) comportant, à l'état monté, des trous traversants s'étendant dans une direction verticale, et dans lequel l'élément de liaison (17) est relié à la chaîne à maillons en caoutchouc (12) au moyen d'au moins un boulon (19) passant à travers l'un des trous traversants de la chaîne à blocs en caoutchouc (12).

6. Convoyeur de distribution selon l'une des revendications 1 à 5, dans lequel le boulon coulissant (20) est disposé entre deux éléments de fixation latéraux (21) fixés au chariot de transport (3).
